# EUROPÄISCHE PATENTSCHRIFT

(11) **EP 1 163 284 B1**
(45) Veröffentlichungstag und Bekanntmachung des Hinweises auf die Patenterteilung: **07.06.2006**
(21) Anmeldenummer: 00916863.4
(22) Anmeldetag: 24.02.2000
(51) Int. Cl.: C08G 63/82, C08G 18/16

(54) **VERFAHREN ZUR HERSTELLUNG VON POLYADDITIONSHARZEN DURCH HETEROGENE KATALYSE**
PROCESS FOR PRODUCING POLYADDITION RESINS BY HETEROGENEOUS CATALYSIS
PROCÉDÉ POUR LA PRÉPARATION DE RÉSINES DE POLYADDITION PAR CATALYSE HÉTÉROGÈNE

(30) Priorität: 24.02.1999 DE 19907861
(43) Veröffentlichungstag der Anmeldung: 19.12.2001
(73) Patentinhaber: BASF Coatings Aktiengesellschaft, 48165 Münster (DE)
(72) Erfinder: JUNG, Werner-Alfons, D-59387 Ascheberg (DE); RINK, Heinz-Peter, D-48153 Münster (DE); FUCHS, Eberhard, D-67227 Frankenthal (DE); STRAEHLE, Wolfgang, D-48165 Münster (DE)
(74) Vertreter: Fitzner, Uwe
(86) Internationale Anmeldenummer: PCT/EP2000/001511
(87) Internationale Veröffentlichungsnummer: WO 2000/050487

(56) Entgegenhaltungen:
- EP-A- 0 355 479
- GB-A- 1 372 854
- GB-A- 1 552 018

## Beschreibung

Die vorliegende Erfindung betrifft ein Verfahren zur Herstellung von Polyadditionsharzen.

Bekanntermaßen handelt es sich bei der Polykondensation um eine Stufenreaktion niedermolekularer Verbindungen zu Oligomeren und/oder Polymeren. Die Reaktionsgeschwindigkeit der Polykondensation kann durch Erhöhung der Reaktionstemperatur gesteigert werden. Einer beliebigen Erhöhung der Reaktionstemperatur in kürzeren Zeitabständen sind jedoch Grenzen gesetzt, weil vor allem größeren Reaktoren nicht genügend thermische Energie zugeführt werden kann, um die Reaktionsmischung schneller aufzuschmelzen und zu kondensieren. Weitere limitierende Parameter sind die vorhandene nutzbare thermische Energie, die Wärmeübertragungskoeffizienten, die Schaumbildung, welche durch das Abdestillieren von beispielsweise Wasser hervorgerufen wird, oder die während der Stufenreaktion ansteigende Viskosität des Polykondensats, welche das rasche Entweichen von beispielsweise Wasser immer mehr erschwert. Außerdem sind hohe Reaktionstemperaturen oft nachteilig für die Eigenfarbe des Polykondensats.

Es ist bekannt, die Reaktionsgeschwindigkeit der Polykondensation durch Katalysatoren wie Lithiumoctoat, Dibutylzinnoxid, Dibutylzinndilaurat, Zinnsäure oder para-Toluolsulfonsäure zu erhöhen und damit die Synthesezeit zu verkürzen. Indes sind diese Katalysatoren in den Folgeprodukten der Polykondensationsharze oftmals nicht erwünscht. Werden nämlich die Polykondensationsharze für die Herstellung von Polyadditionsharzen verwendet, können diese Katalysatoren unerwünschte Nebenreaktionen hervorrufen, welche die Brauchbarkeit der Polyadditionsharze verschlechtert. Ein typisches Beispiel ist die Herstellung von isocyanatgruppenhaltigen Polyurethanpräpolymeren aus Polyestern mit endständigen Hydroxylgruppen (Polyesterpolyole). Die üblicherweise angewandten Katalysatoren katalysieren auch Reaktionen der Isocyanatgruppen, so daß zahlreiche Nebenprodukte in größeren Mengen entstehen, welche das anwendungstechnische Eigenschaftsprofil des Polyadditionsharzes verschlechtern. Werden die Polykondensationsharze direkt zur Herstellung von Beschichtungsstoffen verwendet, können die Katalysatoren die Reaktion mit den Vemetzungsmitteln so stark beschleunigen, daß sich zu früh vernetzte Produkte bilden. Diese machen sich in der fertigen Lackierung als Stippen bemerkbar. Es ist deshalb notwendig, die genannten Katalysatoren aus den Polykondensationsharzen zu entfernen, was indes auf einfachem Wege nicht möglich ist.

Aus der GB 1 552 018 ist die Herstellung Übergangsmetallkatalysatoren und deren Verwendung bekannt. Es wird in dieser Schrift jedoch an keiner Stelle die Polyaddition erwähnt, sondern es wird auf Veresterungen bzw. bei der Würdigung des Standes der Technik auch auf Polymerisationen eingegangen.

Aufgabe der vorliegenden Erfindung ist es, ein Verfahren zur Polyaddition niedermolekularer Verbindungen bereitzustellen, welche die Nachteile des Standes der Technik nicht mehr länger aufweisen, sondern es gestatten, die Reaktionsgeschwindigkeit mit Hilfe von Katalysatoren problemlos zu erhöhen, ohne daß es dabei zu einer thermischen Schädigung der gebildeten Polykondensationsharze oder Polyadditionsharze kommt. Desweiteren sollen die bei den neuen Verfahren angewandten Katalysatoren in den Folgeprodukten der Polykondensationsharze und den Polyadditionsharzen keine unerwünschten Nebenreaktionen mehr hervorrufen. Außerdem sollen sich die Katalysatoren nach den Stufenreaktionen bei Bedarf in einfacher Weise wieder entfernen lassen.

Demgemäß wurde das neue Verfahren zur Herstellung von Polyadditionsharzen durch Polyaddition in einem Reaktor gefunden.

Dieses Verfahren ist dadurch gekennzeichnet, dass man hierbei mindestens einen heterogenen Katalysator verwendet, wobei man als heterogene Katalysatoren belegte und nicht belegte, unlösliche und schwerlösliche Metall- und Nichtmetalloxide, Sulfide, Selenide, Telluride, Phosphate, Heteropolysäuren und/oder saure Ionenaustauscherharze verwendet.

Im Hinblick auf den Stande Technik war es überraschend und für den Fachmann nicht vorhersehbar daß die der vorliegenden Erfindung zugrundeliegende Aufgabe durch die erfindungsgemäße Verwendung heterogener Katalysatoren gelöst werden konnte. Hierbei war noch mehr überraschend, daß eine Vielzahl anorganischer und organischer Stoffe als heterogene Katalysatoren verwendet werden können. Die breite Vielfalt von Katalysatoren, welche erfindungsgemäß zur Verfügung steht, gestattet in außerordentlich vorteilhafter und einfacher Weise, für die jeweilige Polykondensation und Polyaddition den optimalen Katalysator auszuwählen. Außerdem gestattet es die außerordentlich breite Vielfalt von Formen, in denen der heterogene Katalysator zur Verfügung gestellt werden kann, seine vorteilhafte und einfache Anpassung an vorhandene Reaktorgeometrien und seine einfache Abtrennung von den Reaktionsprodukten. Noch weniger vorhersehbar war, daß die Vorteile der erfindungsgemäßen Verfahren und der damit hergestellten Polyadditionsharze in vollem Umfang auf deren Folgeprodukten ausstrahlen. So weisen Beschichtungsstoffe auf Basis der erfindungsgemäß hergestellten Harze ein besonders vorteilhaftes anwendungstechnisches Eigenschaftsprofil auf. Gleiches gilt für die Polyadditionsharze, welche unter Verwendung der Polykondensationsharze hergestellt worden sind.

Das erfmdungsgemäße Verfahren wird zur Herstellung von Polyadditionsharzen angewandt. Die Polyadditionsharze werden in Stufenreaktionen über reaktive Oligomere als diskrete Zwischenstufen gebildet. Die Additionsreaktionen verlaufen ohne Abspaltung kleiner Moleküle häufig unter Verschiebung von Wasserstoffatomen. Die reaktiven Oligomeren werden auch als Präpolymere bezeichnet. Sie enthalten noch reaktive funktionelle Gruppen und sind bei der Polymersynthese am Endaufbau der Polymeren beteiligt.

Beispiele für erfindungsgemäße Polyadditionsharze, welche nach dem erfindungsgemäßen Verfahren hergestellt werden können, sind Polyurethane oder Polyharnstoffe, insbesondere Polyurethane, wie sie insbesondere für die Herstellung von Beschichtungsstoffen verwendet werden.

Beispiele für Präpolymere, welche nach dem erfindungsgemäßen Verfahren hergestellt werden können, sind die Polyurethanpräpolymere, welche noch freie Isocyanatgruppen enthalten.

Die wesentliche Verfahrensmaßnahme des erfindungsgemäßen Verfahrens ist die Verwendung mindestens eines heterogenen Katalysators, welche in dem Reaktionsgemisch im wesentlichen oder völlig unlöslich ist. Im Rahmen der vorliegenden Erfindung weist der Begriff "im wesentlichen unlöslich" darauf hin, daß nur so viele gelöste Anteile des heterogenen Katalysators in dem Reaktionsgemisch vorhanden sind, daß sie das Eigenschaftsprofil des en Polykondensationsharzes und Polyadditionsharzes nicht beeinflussen.

Als erfindungsgemäß zu verwendende heterogene Katalysatoren kommen insbesondere belegte und nicht belegte, unlösliche oder schwerlösliche Metall- und Nichtmetalloxide, Salze, Sulfide, Selenide, Telluride, Zeolithe, Phosphate, Heteropolysäuren und/oder saurer oder alkalische Ionenaustauscherharze in Betracht.

Die erfindungsgemäß zu verwendenden heterogenen Katalysatoren können mit Verbindungen der 1. und 7. Hauptgruppe des Periodensystems dotiert sein. Beispiele geeigneter Verbindungen dieser Art sind Lithiumhydroxid, Natriumhydroxid, Kaliumhydroxid, Lithiumchlorid, Natriumchlorid, Kaliumchlorid, Lithiumfluorid, Natriumfluorid, Kaliumfluorid, Magnesiumfluorid, Calciumfluorid oder Bariumfluorid.

Im Rahmen der vorliegenden Erfindung ist unter den Begriff "Periodensystem" das Periodensystem der Elemente, wie es von Mendelejeff und Meyer entwickelt wurde und in zahlreichen Lehrbüchern beschrieben ist, zu verstehen.

Des weiteren können die erfindungsgemäß zu verwendenden heterogenen Katalysatoren bis zu 50 Gew.-%, vorzugsweise bis zu 40 Gew.-% und insbesondere bis zu 30 Gew.-% an Kupfer, Silber, Zinn, Zink, Mangan, Rhenium, Osmium, Kobalt, Rhodium, Iridium, Nickel, Palladium, Platin und/oder Vanadium enthalten.

Beispiele geeigneter Metall- und Nichtmetalloxide sind saure, basische oder amphotere Oxide der 2., 3. und 4. Hauptgruppe des Periodensystems wie Calciumoxid, Magnesiumoxid, Boroxid, Aluminiumoxid, Siliziumdioxid, insbesondere pyrogenes Siliziumdioxid, Kieselgel, Kieselgur und/oder Quarz, oder Zinndioxid; saure, basische oder amphotere Oxide der 2.bis 6. Nebengruppen des Periodensystems wie Titandioxid, insbesondere amorphes Titandioxid, Anatas oder Rutil, Zirkonoxid, Zinkoxid, Manganoxid, Vanadiumoxid, Nioboxid, Eisenoxide, Chromoxide, Molybdänoxide oder Wolframoxid; oder Oxide der Lanthanide oder Actinide wie Ceroxid, Praseodymoxid,Neodymoxid, Samariumoxid, Europiumoxid, Gadoliniumoxid, Terbiumoxid, Dysprosiumoxid, Holmiumoxid, Erbiumoxid, Thuliumoxid, Ytterbiumoxid, Luthetiumoxid oder Thoriumoxid; oder Mischoxide der genannten Elemente oder Gemische dieser Oxide und/oder Mischoxide.

Ein Beispiel eines geeigneten Salzes ist schwefelsaures Titandioxid.

Beispiele geeigneter Sulfide, Selenide und Telluride sind Zinktellurid, Zinnselenid, Molybdänsulfid, Wolframsulfid, Nickelsulfid, Zinksulfid oder Chromsulfid.

Beispiele geeigneter Zeolithe sind Ionenaustauscher wie Alkalizeolithe ("Permutite®") oder Molekularsiebe wie Chabasit, Gmelinit oder Erionit.

Beispiele geeigneter Phosphate sind Calciumphosphat oder Eisenphosphat.

Beispiele geeigneter Heteropolysäuren sind die Heteropolysäuren, welche von Wolfram -, Molybdän- und/oder Vanadiumpolysäuren mit Borsäure, Kieselsäure, Phosphorsäure, Arsensäure, Tellursäure oder Periodsäure gebildet werden.

Beispiele geeigneter saurer oder alkalischer Ionenaustauscherharze sind organische Polymere, welche anionische Gruppen und/oder Säuregruppen oder kationische Gruppen und/oder Kationen bildende Gruppen enthalten. Beispiele geeigneter anionischer Gruppen bzw. Säuregruppen sind Sulfonate bzw. Sulfonsäuregruppen. Beispiele geeigneter kationischer Gruppen bzw. Kationen bildender Gruppen sind primäre, sekundäre, tertiäre oder quaternäre Ammoniumgruppen bzw. primäre, sekundäre oder tertiäre Amine. Beispiele geeigneter organischer Polymere sind perfluorierte Polymere, Polybenzimidazole, Polyetherketone, Polysulfone, Polyethersulfone oder Polyetherketonesulfone.

Der erfindungsgemäß zu verwendende heterogene Katalysator ist je nach seiner Zusammensetzung ein Vollkontakt- oder Trägerkatalysator. So kann beispielsweise Titandioxid oder Zinndioxid als Titandioxidstrang oder Zinndioxidstrang (Vollkontaktkatalysator) oder als dünne Schichten auf einem Träger verwendet werden (Trägerkatalysator). Beispiele geeigneter Träger sind Siliziumdioxid, Aluminiumoxid oder Zirkonoxid. Die Schichten aus Titandioxid oder Zinndioxid können beispielsweise durch Hydrolyse von Titantetrachlorid oder Zinntetrachlorid aufgetragen werden. Auch titandioxid- oder zinndioxidhaltige Sole sind verwendbar.

Der erfindungsgemäß zu verwendende heterogene Katalysator kann für das erfindungsgemäße Verfahren in den unterschiedlichsten Formen verwendet werden. Beispielsweise kann in einem geeigneten Polykondensationsreaktor oder Polyaditionsreaktor die Reaktorwandung oder andere Reaktorteile, welche mit dem Reaktionsgemisch in Berührung kommen, mit den heterogenen Katalysatoren haftfest beschichtet sein. Ein typisches Beispiel für einen geeigneten Polykondensationsreaktor wird in der Patentschrift WO 97/35902 beschrieben.

Bei dieser Variante der erfindungsgemäßen Verfahren erfolgt die Abtrennung des heterogenen Katalysators automatisch, wenn das Reaktionsprodukt aus dem Reaktor ausgetragen wird.

Der erfindungsgemäß zu verwendende heterogene Katalysator kann indes auch in der Form von Pulvern, Strängen, Kuchen und/oder Maschennetzen in die Reaktionsmischung eingebracht werden oder er wird in Siebkörbe oder Netzen im Reaktor fest oder wiederabnehmbar verankert. Welche Variante hierbei gewählt wird, richtet sich in erster Linie nach der Geometrie des Reaktors.

Nach der Polyaddition kann der erfindungsgemäße Katalysator durch Filtration und/oder durch Herausziehen aus der Reaktionsmischung entfernt werden, was ein besonderer Vorteil des erfindungsgemäßen Verfahrens ist.

Das erfindungsgemäße Verfahren ist besonders gut für die Herstellung von Polyadditionsharzen geeignet. Besondere Vorteile resultieren, wenn für die Herstellung der Polyadditionsharze die Polykondensationsharze oder ohne Katalysator hergestellte Polykondensationsharze verwendet werden.

Mit besonderem Vorteil wird das erfindungsgemäße Verfahren für die Herstellung von Polyurethanen, insbesondere Polyurethanpräpolymeren, angewandt, welche (potentiell) ionische funktionelle Gruppen oder keine dieser Gruppen aufweisen. Diese Polyurethane werden üblicherweise als thermoplastische Kunststoffe oder Schaumstoffe oder in Polyurethanklebstoffen oder Polyurethanlacken verwendet. Bei ihrer Verwendung in Polyurethanlacken weisen die Polyurethane im allgemeinen Gruppen auf, die sie Wasser dispergierbar machen, wie etwa die (potentiell) ionischen Gruppen wie Sulfon-, Phosphon- oder Carbonsäuregruppen oder Aminogruppen und/oder hydrophile nicht ionische Gruppen wie Polyalkylenethergruppen.

Die Herstellung der erfindungsgemäßen isocyanatgruppenhaltigen Polyurethanpräpolymeren erfolgt durch Reaktion von Polyolen mit überschüssigen Polyisocyanaten bei Temperaturen von bis zu 150°C, bevorzugt 50 bis 130°C, in organischen Lösemitteln, die nicht mit Isocyanaten reagieren können, erfolgen. Das Äquivalentverhältnis von NCO- zu OH-Gruppen liegt vorzugsweise zwischen 2,0 : 1,0 und > 1,0 : 1,0, bevorzugt zwischen 1,4 : 1 und 1,1 : 1.

Als Polyole kommen die üblichen und bekannten Polyetherpolyole und/oder Polyesterpolyole, insbesondere Polyesterpolyole, in Betracht. Erfindungsgemäß ist es von Vorteil, wenn die Polyetherpolyole und Polyesterpolyole keine herkömmlichen Katalysatoren mehr enthalten. Im Falle der Polyesterpolyole kann dies dadurch erreicht werden, daß sie ohne Katalysator oder, nach einem Verfahren zur Herstellung von Polykondensationsharzen hergestellt werden. Hierbei handelt es sich um eine Stufenreaktion, welche unter Abspaltung kleiner Moleküle wie Wasser, Alkohole, Phenole oder Halogenwasserstoffe abläuft.

Beispiele für Polykondensationsharze, welche nach dem Verfahren hergestellt werden können, sind Polyamide, Polyimide, Polyester, Polycarbonate, Aminoplaste, Phenoplaste, Polysulfide oder Harnstoffharze, insbesondere Polyester.

Das Verfahren ist besonders gut für die Herstellung von Polyesterharzen geeignet. Besondere Vorteile resultieren, wenn mit Hilfe des Verfahrens Polyesterharze hergestellt werden, wie sie üblicherweise in Polyester-Lacken verwendet werden. Das Verfahren ist insbesondere für die Herstellung von hydroxylgruppenhaltigen Polyesterharzen (Polyesterpolyole) hervorragend geeignet, wie sie für die Herstellung von Polyadditionsharzen verwendet werden können.

Bekanntermaßen werden Polyesterharze durch Umsetzung von
- gegebenenfalls sulfonierten Polycarbonsäuren oder deren veresterungsfähigen Derivaten, gegebenenfalls zusammen mit Monocarbonsäuren, sowie
- Polyolen, gegebenenfalls zusammen mit Monoolen
hergestellt.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist unnd deshalb bevorzugt verwendet wird.

Beispiele für geeignete zu verwendende acyclische aliphatische Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren von denen Adipinsäure, Glutarsäure, Azelainsäure, Sebacinsäure und/oder Dimerfettsäuren vorteilhaft sind und deshalb bevorzugt verwendet werden.

Beispiele für geeignete zu verwendende cycloaliphatische Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecan-Dicarbonsäure. Die cycloaliphtatischen Dicarbonsäuren können sowohl in ihrer cis- als auch in ihrer trans-Form sowie als Gemisch beider Formen eingesetzt werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure und Fettsäuren natürlich vorkommender Öle. Bevorzugt wird als Monocarbonsäure Isononansäure eingesetzt.

Beispiele geeigneter Polyole sind Diole und tri- und/oder höherfunktionelle Alkohole, insbesondere Diole. Üblicherweise werden die tri- und/oder höherfunktionelle'n Alkohole neben den Diolen in untergeordneten Mengen verwendet, um Verzweigungen in die Polyesterharze einzuführen.

Geeignete Diole (a2) sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole.

Weitere Beispiele geeigneter Diole sind Diole der Formel I oder II: 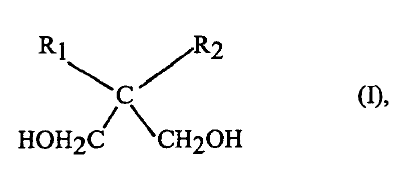 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf; 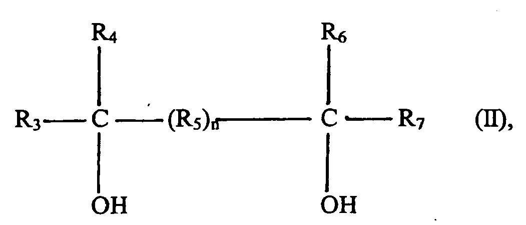 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole I der allgemeinen Formel I sind alle Propandiole der Formel (a21) geeignet, bei denen entweder R₁ oder R₂ oder R₁ und R₂ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole II der allgemeinen Formel II können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Beispiele geeigneter Triole sind Trimethylolethan, Trimethylolpropan oder Glycerin, insbesondere Trimethylolpropan.

Beispiele geeigneter höherfunktioneller Alkohole sind Ditrimethylolpropan, Pentaerythrit, Diglycerin, Triglycerin, Homopentaerythrit oder Zuckeralkohole wie Mannose.

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole oder Phenol.

Die Herstellung des Polyesterharzes kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Erfindungsgemäß ist es von Vorteil, die nach dem Verfahren hergestellten Polyesterpolyole zu verwenden, da hierdurch eine weitere Verkürzung der Prozeßzeit insgesamt resultiert.

Neben diesen Polyolen können noch die vorstehend beschriebenen Diole und/oder Triole und/oder Verbindungen verwendet werden, welche mindestens zwei mit Isocyanat reaktive funktionelle Gruppen und mindestens eine zur Anionen- oder Kationenbildung befähigte funktionelle Gruppe (potentiell ionische funktionelle Gruppen), insbesondere potentiell anionische funktionelle Gruppen, aufweisen.

Geeignete gegenüber Isocyanatgruppen reaktive funktionelle Gruppen sind insbesondere Hydroxylgruppen sowie primäre und/oder sekundäre Aminogruppen, von denen Hydroxylgruppen vorteilhaft sind und deshalb bevorzugt verwendet werden. Funktionelle Gruppen, die zur Anionenbildung befähigt sind, sind Carbonsäure-, Sulfonsäure- und/oder Phosphonsäuregruppen, von denen die Carboxylgruppen vorteilhaft sind und deshalb bevorzugt verwendet werden. Vorzugsweise werden Alkansäuren mit zwei Substituenten am alpha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Beispiele geeigneter Verbindungen dieser Art sind Dimethylolpropionsäure, Dimethylolbuttersäure, Dimethylolpropan- oder Dimethylolbutanphosphonsäure oder -sulfonsäure, insbesondere Dimethylolpropionsäure.

Beispiele geeigneter Polyisocyanate sind aromatische, acyclische aliphatische und cycloaliphatische Diisocyanate. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.

Beispiele geeigneter aromatischer Diisocyanate sind Toluylendiisocyanat, Xylylendiisocyanat, Bisphenylendiisocyanat, Naphtylendiisocyanat oder Diphenylmethandiisocyanat.

Beispiele geeigneter cycloaliphatischer Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter erfindungsgemäß zu verwendender acyclischer aliphatischer Diisocyanate sind Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan. Letztere sind aufgrund ihrer beiden aussschließlich an Alkylgruppen gebundenen Isocyanatgruppen trotz ihrer cyclischen Gruppen zu den acyclischen aliphatischen Diisocyanaten zu zählen. Von diesen ist Hexamethylendiisocyanat erfindungsgemäß vorteilhaft und wird deshalb besonders bevorzugt verwendet.

Die erfindungsgemäß hergestellten Polyurethanpräpolymere weisen nach ihrer Herstellung einen konstanten Isocyanatgehalt auf, welcher sich auch nach längerer Lagerung nicht verändert. Dies ist insbesondere für die betriebliche Praxis von Vorteil, weil das erfindungsgemäße Polyurethanpräpolymer in größeren Mengen hergestellt, längere Zeit gelagert und bedarfsweise für die Herstellung von Polyurethanen und Polyurethandispersionen mit vorteilhaften anwendungstechnischen Eigenschaften verwendet werden kann. Die besonderen Vorteile des erfindungsgemäßen Verfahrens und der erfindungsgemäßen Polyesterpolyole strahlen daher bis zu den Beschichtungsstoffen, Lackierungen und Folien, Klebstoffen und Klebschichten sowie Formteilen aus, die auf Basis dieser Polyester, Polyurethanpräpolymere, Polyurethane und Polyurethandispersionen hergestellt werden.

Demgemäß sind diese Polyester, Polyurethanpräpolymere, Polyurethane und Polyurethandispersionen hervorragend für die Herstellung von thermoplastischen und duroplastischen Formteilen sowie von physikalisch, thermisch und/oder mit aktinischer Strahlung härtbaren Klebstoffen und von Beschichtungsstoffen geeignet, wie sie zur Herstellung von Klebschichten oder in der Automobilerstlackierung, der Autoreparaturlackierung, der industriellen Lackierung, inklusive Container Coatings und Coil Coatings, oder der Möbellackierung zur Herstellung ein oder mehrschichtiger transparenter und/oder farb- und/oder effektgebender Lackierungen, Folien oder lackierter Folien verwendet werden. Hervorzuheben ist, daß die gewünschten Eigenschaftsprofile stets sicher und zuverlässig reproduziert werden können, was die erfindungsgemäßen Formteile, Beschichtungsstoffe, Lackierungen, Folien und lackierte Folien sowie Klebstoffe und Klebschichten sowohl aus Sicht des Produzenten als auch des Anwenders besonders attraktiv macht.

Die entsprechenden Klebschichten Formteile, Lackierungen und Folien weisen hervorragende anwendungstechnische Eigenschaften auf, die sicher und zuverlässig eingestellt und reproduziert werden können.

### Beispiele und Vergleichsversuche

### Beispiele 1 und 2 und V1 und V2 (nicht erfindungsgemäß)

### Die Herstellung von Polyesterpolyolen

In einem für die Polyesterherstellung geeigneten 41-Edelstahkeaktor wurden 446,8 g einer Dimerfettsäure (Pripol 1013), 307,9 g Hexandiol, 271,5g Neopentylglykol, 557,9g Isophthalsäure und 40g Cyclohexan eingewogen und auf 140 °C aufgeheitzt. Der Ansatz wurde so lange kondensiert, bis eine Wasser Menge von 170 bis 180g abdestilliert war.

Die Ausbeute an Wasser wurde in Abhängigkeit von der Reaktionzeit gemessen. Während der Dauer der Reaktion wurde der Reaktor zur Inertisierung mit einem Stickstoffstrom von 30 l/h gespült. Die Reaktionsmischung wurde derart aufgeheizt, daß eine Kolonnenkopftemperatur von 69 bis 70 °C eingehalten wurde.

Bei Beispiel 1 wurde als heterogener Katalysator 0,19 Gew.-% pyrogenes Siliziumdioxid verwendet.

Bei Beispiel 2 wurde als heterogener Katalysator 0,065 Gew.-% Titandioxid in Pulverform verwendet.

Bei dem Versuch V1 wurde kein Katalysator verwendet.

Bei den Versuch V2 wurde als Katalysator Fascat 4100 (hydratisiertes Monobutylzinnoxid der Firma Atochem) verwendet.

Die Tabelle gibt ein Überblick über die erhaltenen Versuchsergebnisse.

### Tabelle: Die Polykondensation durch heterogene Katalysatoren

### Beispiele:

| | | | | | | | |
|---|---|---|---|---|---|---|---|
| **1** | | **2** | | **V1** | | **V2** | |
| **t (min)H**_{**2**}**O (ml)** | | **t (min)H**_{**2**}**O (ml)** | | **t (min)H**_{**2**}**O (ml)** | | **t (min)H**_{**2**}**O (ml)** | |
| 13 | 10 | 9 | 10 | 15 | 3 | 13 | 12 |
| 42 | 23 | 23 | 16 | 34 | 7 | 39 | 24 |
| 71 | 31 | 58 | 25 | 52 | 10,5 | 71 | 35 |
| 105 | 37 | 83 | 35 | 99 | 19,5 | 111 | 51 |
| 132 | 43 | 105 | 41 | 126 | 24,5 | 147 | 67 |
| 163 | 57 | 115 | 43 | 150 | 30,5 | 177 | 85 |
| 182 | 68 | 130 | 46 | 170 | 36,5 | 216 | 111 |
| 192 | 76 | 145 | 52 | 192 | 44,5 | 247 | 139 |
| 213 | 93 | 155 | 55 | 213 | 52,5 | 286 | 159 |
| 232 | 106 | 165 | 61 | 229 | 61,5 | 303 | 167 |
| 247 | 118 | 175 | 67 | 245 | 70,5 | **333** | **178** |
| 270 | 133 | 180 | 69 | 262 | 82,5 | | |
| 288 | 146 | 199 | 86 | 266 | 83 | | |
| 297 | 152 | 225 | 103 | 314 | 102 | | |
| 321 | 161 | 243 | 116 | 368 | 130 | | |
| **497** | **173** | 261 | 132 | 419 | 136 | | |
| | | 273 | 143 | 434 | 149 | | |
| | | 288 | 155 | 501 | 158 | | |
| | | 297 | 161 | 592 | 164 | | |
| | | 340 | 177 | 708 | 170 | | |

### Beispiele 3 und 4 und Vergleichsversuche V3 und V4

### Die Herstellung von Polyurethanpräpolymeren

In einem für die Polyurethansynthese geeigneten 41-Edelstahlreaktor wurden 497,64 g einer 72 %igen Lösung eines Polyesterpolyols und 154,1 g meta-Tetramethylxylylendiisocyanat eingewogen und auf 90 °C aufgeheizt. Die resultierende Reaktionsmischung wurde so lange erhitzt, bis sich ein konstanter Isocyanatgehalt innerhalb der Grenzen von 2 bis 2,5 Gew.-% einstellte.

Bei Beispiel 3 wurde das Polyesterpolyol des Beispiels 1 verwendet. Es wurde ein konstanter Isocyanatgehalt von 2,05 Gew.-% erreicht.

Bei Beispiel 4 wurde das Polyesterpolyol des Beispiels 2 verwendet. Es wurde ein konstanter Isocyanatgehalt von 2,3 Gew.-% erreicht.

Bei Vergleichsversuch V3 wurde ein Polyesterpolyol, welches ohne Katalysator hergestellt worden war, verwendet. Es wurde ein konstanter Isocyanatgehalt von 2,04 Gew.-% erreicht.

Bei Vergleichsversuch V4 wurde das Polyesterpolyol des Vergleichsversuchs V2 verwendet. Es wurde kein konstanter Isocyanatgehalt erreicht, sondern der Isocyanatgehalt sinkt aufgrund von Nebenreaktionen immer weiter ab.

Die Beispiele 3 und 4 belegen, daß die nach den Beispielen 1 und 2 hergestellten Polyesterpolyole für die Herstellung von Polyurethanpräpolymeren hervorragend geeignet sind. Das unter Verwendung eines herkömmlichen Katalysators hergestellte Polyesterpolyol des Versuchs V2 war dagegen ungeeignet.

### Beispiel 5 und Vergleichsversuche V5 und V6

### Die Herstellung von Polyurethanpräpolymeren nach dem erfindungsgemäßen Verfahren (Beispiel 5) und nach herkömmlichen Verfahren (Vergleichsversuche V5 und V6)

Für den Vergleichsversuch V5 wurde der Vergleichsversuch V3 wiederholt.

Für Beispiel 5 und Vergleichsversuch V6 wurde der Vergleichsversuch V3 wiederholt, nur daß
- bei Beispiel 5 0,16 g Titandioxid-Pulver und
- bei Vergleichsversuch V6 0,01 g Fascat 4100
verwendet wurde. In allen Fällen wurde versucht, die Polyaddition zu lange durchzuführen, bis ein konstanter Isocyanatgehalt erreicht war. Bei dem Vergleichsversuch V5 war dies nach 7 Stunden, bei Beispiel 5 nach 5 Stunden der Fall. Dies stellte eine signifikante Verkürzung der Reaktionszeit dar. Bei den Vergleichsversuche V6 war kein konstanter Isocyanatgehalt zu erzielen, sondern der Isocyanatgehalt sank aufgrund von Nebenreaktionen immer weiter ab.

## Patentansprüche

1. Verfahren zur Herstellung von Polyadditionsharzen durch Polyaddition, **dadurch gekennzeichnet, daß** man hierbei mindestens einen heterogenen Katalysator verwendet, wobei man als heterogene Katalysatoren belegte und nicht belegte, unlösliche oder schwerlösliche Metall- und Nichtmetalloxide, Sulfide, Selenide, Telluride, Phosphate, Heteropolysäuren und/oder saure Ionenaustauscherharze verwendet.

2. Das Verfahren nach Anspruch 1, **dadurch gekennzeichnet, daß** der heterogene Katalysator als fester Bestandteil in Form von Pulvern, Strängen, Kuchen und/oder Maschennetzen in die Reaktionsmischung eingebracht oder als Beschichtung von Reäktorteilen mit der Reaktionsmischung in Berührung gebracht wird.

3. Das Verfahren nach Anspruch 1 oder 2, **dadurch gekennzeichnet, daß** man den heterogenen Katalysator in Siebkörben oder Netzen im Katalysator fest oder wiederabnehmbar verankert.

4. Das Verfahren nach einem der Ansprüche 1 bis 3, **dadurch gekennzeichnet, daß** man den heterogenen Katalysator nach der Reaktion durch Filtration und/oder Herausziehen aus der Reaktionsmischung entfernt und/oder durch Austrag der Reaktionsmischung aus dem Reaktor hiervon abtrennt.

5. Das Verfahren nach Anspruch 4, **dadurch gekennzeichnet, daß** die Reaktorwandung und/oder andere mit der Reaktionsmischung in Kontakt stehende Reaktorbestandteile mit dem, Katalysator haftfest belegt sind.

## Claims

1. A process for preparing polyaddition resins by polyaddition, **characterized in that** at least one heterogeneous catalyst is used, the heterogeneous catalysts used comprising coated and uncoated, insoluble or sparingly soluble metal oxides and non-metal oxides, sulphides, selenides, tellurides, phosphates, heteropolyacids and/or acidic ion exchange resins.

2. Process according to Claim 1, **characterized in that** the heterogeneous catalyst is introduced into the reaction mixture as a solid component in the form of powders, extrudates, cakes and/or meshes or is brought into contact with the reaction mixture as a coating on reactor components.

3. Process according to Claim 1 or 2, **characterized in that** the heterogeneous catalyst is fixedly or removably anchored in baskets or meshes.

4. Process according to one of Claims 1 to 3, **characterized in that** following the reaction the heterogeneous catalyst is removed by filtration and/or withdrawal from the reaction mixture and/or is separated from the reaction mixture by discharge thereof from the reactor.

5. Process according to Claim 4 **characterized in that** the reactor walls and/or other reactor components in contact with the reaction mixture have a firmly adhering coating of the catalyst.

## Revendications

1. Procédé de préparation de résines de polyaddition, par polyaddition, **caractérisé en ce que** l'on y utilise au moins un catalyseur hétérogène, où l'on utilise en tant que catalyseur hétérogène des oxydes métalliques et non métalliques, enrobés et non enrobés, insolubles ou peu solubles, des sulfures, des séléniures, des tellurures, des phosphates, des hétéropolyacides et/ou des résines échangeuses d'ions acides.

2. Procédé selon la revendication 1, **caractérisé en ce que** le catalyseur hétérogène est incorporé au mélange réactionnel en tant que constituant solide sous forme de poudres, de granulés cylindriques, de gâteaux et/ou de réseaux maillés, ou est mis en contact avec le mélange réactionnel en tant que revêtement d'éléments de réacteur.

3. Procédé selon la revendication 1 ou 2, **caractérisé en ce que** l'on ancre le catalyseur hétérogène dans des paniers perforés ou des réseaux dans le catalyseur de manière fixe ou amovible.

4. Procédé selon l'une quelconque des revendications 1 à 3, **caractérisé en ce que** l'on élimine le catalyseur hétérogène du mélange réactionnel, après la réaction, par filtration et/ou extraction et/ou l'on le sépare du mélange réactionnel par décharge de celui-ci hors du réacteur.

5. Procédé selon la revendication 4, **caractérisé en ce que** la paroi du réacteur et/ou d'autres éléments du réacteur en contact avec le mélange réactionnel sont recouverts du catalyseur de manière fixement adhérente.
